# EUROPEAN PATENT SPECIFICATION

(11) **EP 1 151 602 B1**
(45) Date of publication and mention of the grant of the patent: **22.01.2003**
(21) Application number: 00913372.9
(22) Date of filing: 04.02.2000
(51) Int. Cl.: H04N 3/32, H04N 3/27

(54) **CONTROL OF SCANNING VELOCITY MODULATION AT MULTIPLE SCANNING FREQUENCIES**
STEUERUNG DER ABTASTGESCHWINDIGKEITSMODULATION BEI MEHRFACHEN ABTASTFREQUENZEN
CONTROLE DE LA MODULATION DE LA VITESSE DE BALAYAGE AVEC PLUSIEURS FREQUENCES DE BALAYAGE

(30) Priority: 09.02.1999 US 119278 P
(43) Date of publication of application: 07.11.2001
(73) Proprietor: Thomson Licensing S.A., 92648 Boulogne Cedex (FR)
(72) Inventor: ALLENDER, Jeffrey, Owen, Morristown, IN 46161 (US); SENDELWECK, Gene, Karl, Indianapolis, IN 46250 (US)
(74) Representative: Hartnack, Wolfgang, Dipl.-Ing.
(86) International application number: US0002989
(87) International publication number: WO00048390

(56) References cited:
- EP-A- 0 784 402
- PATENT ABSTRACTS OF JAPAN vol. 010, no. 279 (E-439), 20 September 1986 (1986-09-20) & JP 61 099467 A (SONY CORP), 17 May 1986 (1986-05-17)
- PATENT ABSTRACTS OF JAPAN vol. 012, no. 375 (E-666), 7 October 1988 (1988-10-07) & JP 63 123275 A (MITSUBISHI ELECTRIC CORP), 27 May 1988 (1988-05-27)
- PATENT ABSTRACTS OF JAPAN vol. 012, no. 130 (E-603), 21 April 1988 (1988-04-21) & JP 62 254576 A (HITACHI LTD), 6 November 1987 (1987-11-06)

## Description

This invention relates to scanning velocity modulation (SVM) systems and more particularly to the automatic control of scanning velocity modulation signal amplitude at multiple scanning frequencies.

### BACKGROUND OF THE INVENTION

It is well known that in a cathode ray tube display an improvement in apparent picture sharpness can be achieved by modulating the scanning velocity of an electron beam in accordance with the derivative of the luminance portion of the display signal. This derivative signal, or scan velocity modulation signal, can be derived from the luminance portion of the video signal and identifies when scanning beam velocity variations should be employed. Slowing of the scanning velocity of the electron beam causes a greater number of electrons to land at a particular point in the display resulting in brightening of the video monitor display at that particular location on the display. Conversely, accelerating the scanning velocity at a particular portion of the screen results in display darkening. Thus, horizontal rate edges may be visually enhanced by variations in the display intensity at edge transitions caused by the variation of the electron beam speed. This method of picture sharpness enhancement has advantages over a peaking approach to picture sharpness enhancement such as an avoidance of blooming of peaked high luminance (white) picture elements and an avoidance of enhancement of video noise occurring within the bandwidth of the peaked signals.

In Japanese Patent 61-099467 and PAJ vol. 010, No. 279 a multiscan TV receiver is disclosed which employs scanning beam velocity modulation by modulating the voltage applied to a fourth grid of the CRT. The reference also teaches that the velocity modulating voltage applied to the CRT grid is also applied to a peak to peak detector (83). The output from detector (83) is coupled to an AGC circuit (82) which controls the amplitude of the velocity modulating voltage applied to the CRT. In this way a closed loop is formed which maintains the peak to peak value of the velocity modulating voltage at a prescribed amount. Separated horizontal syncs are fed to discriminator (84) which produces an output signal that is applied to control a time constant of AGC circuit (82).

A TV receiver which employs scanning beam velocity modulation by means of a magnetic deflection coil is disclosed in US Patent 5982449 and EPO 784 402 A2. A signal for SVM signal derivation is coupled via a digital filtering means (12) which is programmed by CPU (3) based on information derived from the format or content of the input signal selected for display. In this way the sharpness of the displayed image is adapted to the input signal selected. This reference also discloses the use of an SVM driver current feedback loop where driver current is converted to a digital signal and coupled to CPU (3) to change the characteristic of the programmable filter means (12).

SVM systems, such as those described above, are well known for use in television systems, but they are typically not used in computer monitors. SVM systems are generally not well suited for use in monitors that display video signals of various different formats such as VGA, or SVGA which may use alternative scanning frequencies. The horizontal scanning rates of these video formats can be anywhere from 2 to 2.4 times as great as an NTSC horizontal scanning frequency. With the convergence of the television and the computer monitor, SVM is starting to be used under much more demanding conditions. For example, multimedia monitors are becoming available that are also capable of handling computer formats. This presents significant problems as concerns use of SVM. Not only are computer monitor horizontal scan rates greater than conventional NTSC scan rates, but new high definition television scan rates defined by the Advanced Television System Committee (ATSC) standards can also be as much as 2.14 times greater than NTSC television scan rates. Thus, for example, if the NTSC television systems are referred to as having a scan frequency of 1H, then VGA, HDTV and SVGA systems can be said to have scan frequencies of 2H, 2.14H and 2.4H, respectively.

One problem with the use of SVM technology in connection with displays that are to be used for video signals at a variety of different scan rates is that there is generally a doubling in SVM signal amplitude for every octave increase in horizontal scanning frequency. For example, the SVM signal generated from the derivative of a luminance component of a 2H scanning frequency signal will generally be 6 dB greater than the SVM signal which is generated for an NTSC (1H) signal. This amplitude range can result in an SVM signal that is less than optimal. In particular, when SVM systems are used in fixed scanning rate displays, the application of scan velocity modulation to any video signal is optimized having a predetermined range of amplitudes for signal processing at the particular scan rate at which the display is to be used. However, when a display is operable at multiple scan rates, it is much more difficult to optimize SVM signal processing since the range of SVM amplitudes can at least double for the various video signal formats. For example, if scan velocity modulation in a multiple scan rate monitor is optimized for 1H video signals, then excess SVM signal amplitude can result causing blooming or other undesirable artifacts when required to function with a 2H video signal. Similarly, when scan velocity modulation in a multiple scan rate monitor is optimized for 2H video signals, the SVM signal amplitude will be too small to provide sufficient image enhancement for 1H signal inputs. It is thus desirable to determine a way in which to ensure that a predetermined range of SVM signal amplitudes is used, regardless of the scan frequency rate of a particular video display format.

### SUMMARY OF THE INVENTION

The present invention provides video display apparatus as defined in claims 1 and 9 and a method as defined in claim 4.

In an inventive method scanning velocity modulation signal amplitude is controlled at a plurality of horizontal scanning frequencies. The method comprises the steps of, generating respective scanning velocity modulation signals from signals having a plurality of horizontal scanning frequencies and coupled for display by said apparatus, and, selectively controlling an amplitude of each respective scanning velocity modulation signal to a predetermined range of amplitudes.

According to one aspect of the invention, the amount of gain applied to the scan velocity modulation signal is reduced as the frequency of the horizontal scanning frequency is increased. For example, gain can be reduced by 6dB for each octave increase in horizontal scanning frequency so as to compensate for the differences introduced by the horizontal scanning frequency associated with various video formats.

According to another aspect of the invention, the horizontal scanning frequency is determined by a scan frequency detector circuit. In this case, the control signal is a DC voltage generated by said scan frequency detector which varies proportionally as a function of the horizontal scanning frequency. This DC voltage can then be used to directly control an amplifier gain. Alternatively, the control signal can be a digital command signal generated by a microprocessor responsive to horizontal scan frequency selection data. In that case, the digital command signal is preferably used to selectively vary an SVM gain register for controlling the amplitude of the SVM signal,

In an alternative embodiment the SVM amplitude control signal can be a digital command signal generated by a microprocessor responsive display source selection data. In that case, the digital command signal is preferably used to selectively vary an SVM gain register for controlling the SVM signal amplitude.

### BRIEF DESCRIPTION OF THE DRAWINGS

FIGURE 1 is a graph of SVM signal amplitude versus scanning frequency.

FIGURE 2 is a block diagram of an inventive SVM automatic gain control system for controlling an SVM signal amplitude.

FIGURE 3 is a detailed circuit diagram showing an embodiment of an SVM circuit with an automatic gain control system according to FIGURE 2.

FIGURE 4 is a block diagram of an alternative inventive embodiment employing an SVM automatic gain control system according to FIGURE 2..

FIGURE 5(a) shows an SVM signal output from a differentiator for a 1H video signal.

FIGURE 5(b) shows the signal of FIGURE 5(a) after amplitude control.

FIGURE 5(c) shows an SVM signal output from a differentiator for a 2H video signal.

FIGURE 5(d) shows the signal of FIGURE 5(c) after amplitude control.

### DETAILED DESCRIPTION

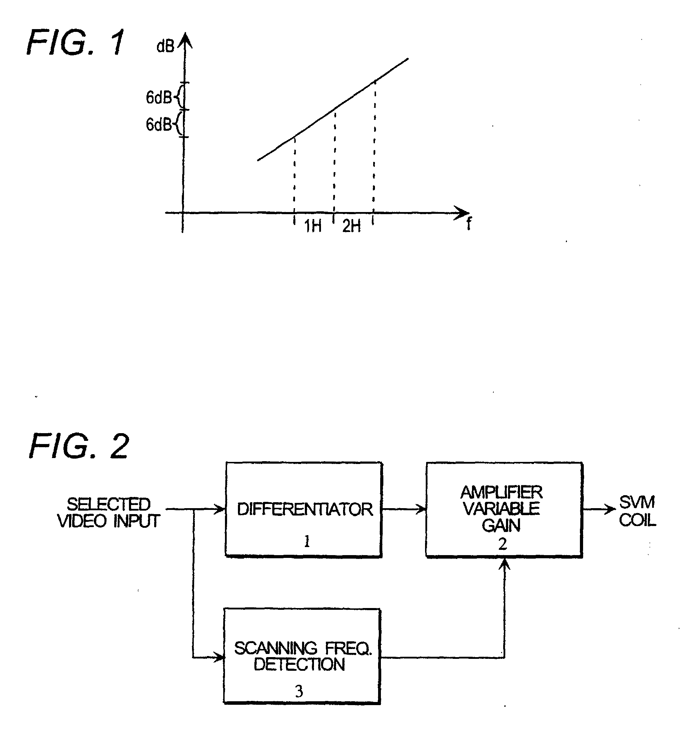

Figure 1 is a plot showing SVM signal amplitude versus scan frequency in a display operable at multiple scanning frequencies. The y-axis represents the SVM signal amplitude, for example in decibels, when generated by a conventional SVM differentiator circuit. The x-axis represents horizontal scanning frequency of an input video signal. The standard NTSC horizontal frequency is denoted by 1H, hence, 2H denotes a scanning frequency which is one octave higher, for example, as used for 640x480 video format. FIGURE 1 illustrates that the SVM signal amplitude increases by about 6dB for video signals having horizontal scanning frequencies in the 2H or greater frequency band. Thus, an SVM circuit designed for specific performance parameters, such as peak to peak clipping and noise coring with in a predetermined range of SVM signal amplitudes with 1H signals, can be over driven when processing SVM signals derived from video signals in the 2H frequency band. Overdriving an SVM system can for example result in, SVM output drive signal clipping, the output driver amplifier operating in a power limitation condition, with in addition, continuous peak to peak clipper activation and attendant loss of image sharpness enhancement. Alternatively, if the SVM circuitry is designed for optimal performance with a range of SVM signal amplitudes derived from 2H video signals, but receives a 1H signal, the SVM signal amplitude will be too small, possibly even failing to overcome the signal range for noise coring, and certainly resulting in insufficient picture enhancement.

FIGURE 2 depicts in block diagram form an open loop SVM automatic gain control system for adjusting SVM signal amplitude to be with in a predetermined amplitude range when operating with video formats having different spatial resolution and different scanning frequencies. In FIGURE 2, a video signal which includes horizontal frequency information is applied to derivative circuit 1. In derivative circuit 1, the luminance component of the video signal is differentiated to produce an SVM signal. The output of derivative circuit 1 is coupled to variable gain amplifier 2. There, the SVM signal is amplified and is used generate a deflection current in the SVM coil for modulating the beam scanning velocity.

According to a preferred embodiment of the invention, scanning frequency detector 3 makes use of a portion of the input signal containing horizontal scanning frequency information to provide an indicator of likely spatial frequency content of the input signal. In simple terms, FIGURE 1 shows the increase in SVM signal amplitude that occurs with a doubling of input frequency. Since an exemplary ATSC image is capable of at least double the horizontal resolution of an NTSC signal, an open loop feed forward SVM amplitude control signal based on horizontal sync frequency determination provides a reliable indication of the spectral content of the displayed image.

To control the gain or SVM signal amplitude generated by amplifier 2 the horizontal scanning frequency is monitored and when it increases above 1H, the feed forward control signal from scan frequency detector 3 causes the SVM signal from amplifier 2 to be reduced in amplitude. Furthermore, open loop SVM signal gain and or amplitude control can be applied generally in accordance with a complementary or inverse transfer function to that depicted in FIGURE 1. Thus, gain, or SVM amplitude, is preferably halved for signals having double frequency scanning rates. Conversely, SVM amplitude or gain can similarly be increased for a corresponding decrease in horizontal scanning frequency.

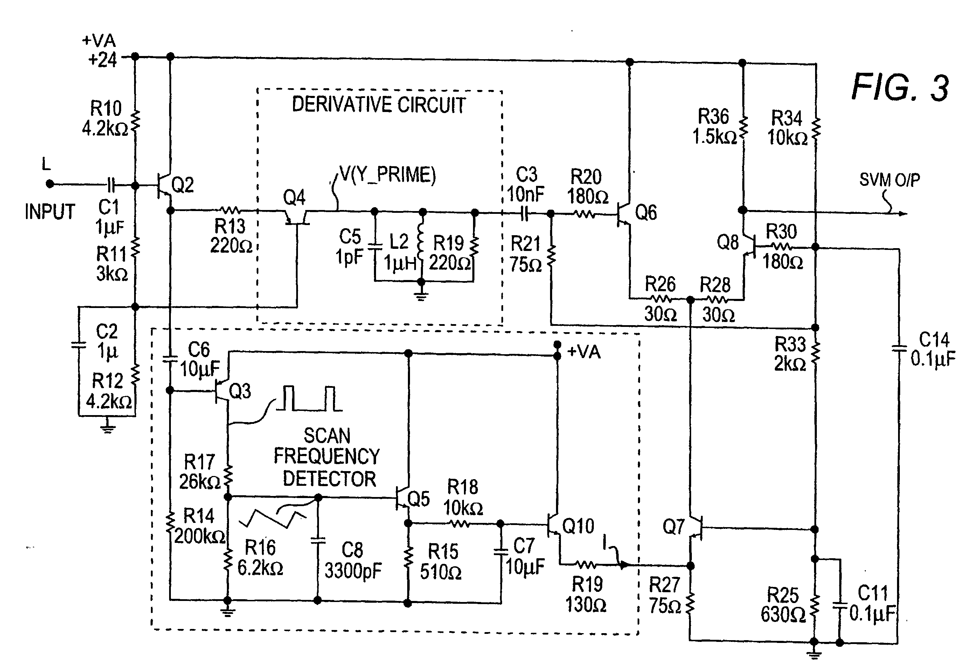

FIGURE 3 is a detailed circuit diagram showing an embodiment of the SVM automatic gain control system of FIGURE 2. As shown in FIGURE 3, a luminance signal with negative going horizontal sync is applied to the input of the circuit. This signal can be provided by horizontal sync, luminance (Y) with sync. The input video signal passes through AC coupling capacitor C1 which is coupled to the base electrode of transistor Q2, an emitter follower. Resistors R10, R11 and R12 form a potential divider and set the base voltages of transistors Q2 and Q4. The collector electrode of transistor Q2 is coupled to a source of operating potential, +VA, typically 24 volts, and its emitter is coupled through resistor R13 to the emitter electrode of grounded base amplifier Q4. The base electrode of transistor Q4 is biased from the junction of resistors R11 and R12 and is decoupled ground via capacitor C2.

The input video signal is differentiated in the collector circuit of transistor Q4 by the parallel configured network comprising capacitor C5, inductor L2 and damping resistor R19 thus producing an SVM signal. The output of the differentiator circuit is coupled via series connected capacitor C3 and resistor R20 to the base of transistor Q6. A resistor R21 is coupled to the junction of capacitor C3 and resistor R20 to bias the base of transistor Q6 to the same potential as that of transistor Q8. Transistors Q6 and Q8 form a differential amplifier in which the gain is set by resistors R26 and R28,R36 and the collector current of current source transistor Q7. Resistors R25, R33 and R34 form a potential divider that provides biasing voltages for transistors Q6, Q7, and Q8, where transistor Q6 is biased via resistors R20 and R21 and transistor Q8 is biased via resistor R30. The junction of resistors R21, R30, R33 and R34 is decoupled to ground by capacitor C14. Similarly capacitor C11 decouples the junction of resistors R25 and R33 to ground. The collector electrode of Q6 is coupled to supply voltage + VA, and the collector electrode of transistor Q8 is coupled to supply voltage + VA through collector load resistor R36. Additionally, the SVM signal output of the differential amplifier is taken from the collector electrode of transistor Q8,

Moving to the scan frequency detector portion of the circuit, the video signal with negative going horizontal frequency information is applied via capacitor C6 to the base electrode of PNP transistor Q3 which is biased by resistor R14 which is connected to ground. Transistor Q3 is configured as a negative going pulse detector which outputs at its collector, a positive going horizontal rate pulse signal derived from the horizontal sync frequency of the incoming video signal. The emitter of transistor Q3 is coupled to operating potential + VA. Series connected resistors R16 and R17 form a collector load for transistor Q3. The positive pulses from the collector are coupled via resistor R17, which determines a charging current for capacitor C8. During intervening pulse periods capacitor C8 is discharged to ground via resistor R16 thus forming a horizontal rate sawtooth signal. The sawtooth waveform is then applied to the base electrode of transistor Q5, an emitter follower, that buffers the sawtooth signal. The collector electrode of transistor Q5 is coupled to supply voltage +VA, and the emitter electrode is coupled through resistor R15 to ground. The emitter of transistor Q5, is also coupled to resistor R18 and capacitor C7 which form a low pass filter that converts the sawtooth signal into a DC voltage having a value in proportion to the horizontal sync frequency of the input video signal, i.e. the higher the horizontal frequency the greater the resultant DC voltage. This frequency dependent DC voltage is coupled to the base of emitter follower transistor Q10 which provides a current I via resistor R19 to the junction of resistor R27 and the emitter of the differential amplifier current source transistor Q7. The collector electrode of transistor Q7 is coupled to the junction of resistors R26 and R28, and the emitter electrode is coupled to ground via resistor R27. As the DC voltage from the scanning frequency detector increases, the voltage at the emitter of transistor Q7 increases causing the base emitter potential to be reduced which in turn reduces the collector current. Thus the current supply to the differential amplifier is reduced causing the SVM cutput signal at transistor Q8 collector to be reduced in amplitude. The reduction in source current of the differential amplifier causes a decrease in the gain of the SVM signal. Thus, the differential amplifier comprised of the transistors Q6, Q7 and Q8 is configured as a variable gain amplifier in which the output signal amplitude is automatically reduced when horizontal scanning frequency of the display signal is increased.

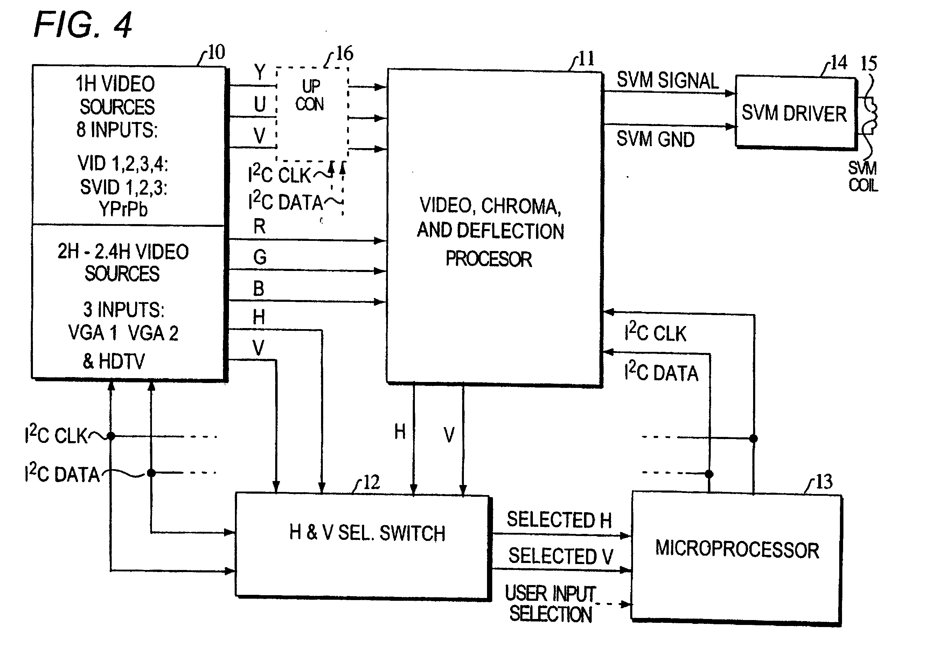

It may be readily appreciated that the embodiment of the invention in FIGURE 2 is not limited to the precise arrangement shown and that there are other alternatives for implementing the control system according to the present invention. In fact, the present invention can be implemented using any circuit that detects a horizontal scan frequency of a video signal and then modifies SVM signal amplitude to maintain optimal SVM performance at different scan frequencies. FIGURE 4 depicts one such alternative embodiment.

In FIGURE 4, input stage 10 is shown with a plurality of user selectable video input sources including several 1H video sources such as NTSC composite video (VID 1, 2, 3, 4), S-video (SVID 1, 2, 3) and component video (Y Pr Pb). In addition, input stage 10 typically has one or more input connections providing user selectable 2H and higher scanning frequency video sources including VGA 1, VGA 2 and HDTV. It should be noted that the invention is not limited in this regard. Other video sources may also be provided and not all of the video sources identified need be supplied.

In a further embodiment shown in FIGURE 4, when the user selected input is an NTSC or other 1H input, the horizontal (H) sync pulses and vertical (V) sync pulses are extracted by a video processor, depicted by exemplary integrated circuit 11, from the composite video or luminance signal components of the selected 1H source. Video processor 11 then outputs the H and V sync pulses separated from the 1H sources to H & V selector switch 12 for selection and coupling to microprocessor 13. The processing features of video processor 11 can be provided by an integrated circuit, for example type TA1276N which is commercially available from Toshiba. However, the invention is not limited in this regard and those skilled in the art will recognize that discrete component circuitry or any other commercially available integrated circuit having similar capabilities can also be used for this purpose.

An up-converter 16 can be provided between input stage 10 and video processor 11. Up-converter 16 is used to convert NTSC or other 1H video signals to 2H video signals and can, for example, be implemented by line doubling. As shown in FIGURE 4, up-converter 16 is controlled by microprocessor 13 via a data bus, for example, employing an I²C protocol, based on a determination of the selected input horizontal frequency by microprocessor 13.

Referring again to block 10 of FIGURE 4, the 2H or higher input signals may provide separate horizontal and vertical sync pulses, which when selected, via the data bus, are directly coupled to H & V selector switch 12 and ultimately to microprocessor 13 for further processing. In the case of these 2H-2.4H video sources, video processor 11 will preferably receive the component video signals (R, G, B) as shown, with selection within processor 11 controlled by microprocessor 13 via the I²C bus.

As has been described, microprocessor 13 is variously coupled to provide control via the I²C bus. Microprocessor 13, can for example be an ST 9296 IC which is commercially available from ST Microelectronics. However, the invention is not limited in this regard and any other microprocessor of similar capability can be used for this purpose.

As depicted in FIGURE 4, microprocessor 13 receives selected H and V sync pulses from H & V selector switch 12 to determine the horizontal frequency of the video source selected for display and SVM enhancement. Microprocessor 13 can determine the horizontal frequency of the selected display signal by a number of methods. For example, as described with reference to FIGURE 2, a frequency dependent voltage may be generated, with the resulting DC value measured by microprocessor 13 and compared with stored values to determine the horizontal frequency of the selected source. In a second method microprocessor 13 can measure a duration or width of an element of the selected horizontal sync pulse to determine the horizontal scanning frequency. In a further method, since microprocessor 13 is responsive to user selection of display signal input, horizontal frequency indicating logic can, for example, be implemented by hard wiring or a look up table to associate the user selected input signal with a specific input signal format and scanning frequency. Furthermore, since various display signals are connected to the display device via mechanically different connectors, the horizontal frequency determination can be derived from the input socket selected. For example NTSC signals, S-video signals and SVGA signals are each input to the display via differing, non-interchangeable connectors. Thus, based on one or a combination of the various horizontal frequency determination methods, microprocessor 13 is preferably programmed to send a horizontal frequency specific gain or amplitude control command via the data bus to video processor 11. Video processor 11 preferably contains an SVM generator with gain or SVM output signal amplitude controlled in response to control command data received from microprocessor 13 via the I²C bus. For example, in the case of IC type TA 1276N previously noted, the SVM gain is controlled by a 2-bit register that can attenuate the SVM signal by 0dB, -6dB, -9dB, with in addition, the capability of inhibiting the SVM signal output. Microprocessor 13 is preferably programmed such that the SVM signal is not attenuated, ie gain is set to 0dB when 1H video sources are determined, and for 2H sources microprocessor 13 generates control data which provides a-6dB reduction in of SVM signal gain. Video sources with scan rates higher than 2H are preferably attenuated in accordance with the transfer function illustrated in FIGURE 1. In general, for each octave increase in scanning frequency, the SVM signal is attenuated 6dB to maintain the SVM signal within a predetermined range of amplitudes. As shown in FIGURE 4, the controlled amplitude SVM signal is coupled to SVM driver 14 and ultimately SVM coil 15 to produce substantially similar image enhancement, independent of the display scanning frequency.

As described previously, NTSC or other 1H video signals can be converted into 2H video signals by up-converter 16. In this way signals with inherently lower image detail, or spatial resolution, are converted and receive detectable attributes indicative of 2H video signals. However, although such up converted signals may be detected as 2H video signals, the image detail is not comparable with that of a signal that originated as 2H signal. In simple terms the up conversion process cannot add image detail absent from the original 1H image. Thus it can be appreciated that although these signals may be detected as 2H video signals, the displayed image can benefit from a level of SVM enhancement greater than that provided for original 2H signals. Thus when up-converter 16 is enabled, microprocessor 13 can determine from an exemplary look up table or the like, an amplitude control value suitable for SVM enhancement of such up-converted images. For example, an up converted image can receive an SVM amplitude value between those provided for 1H and 2H frequency sources.

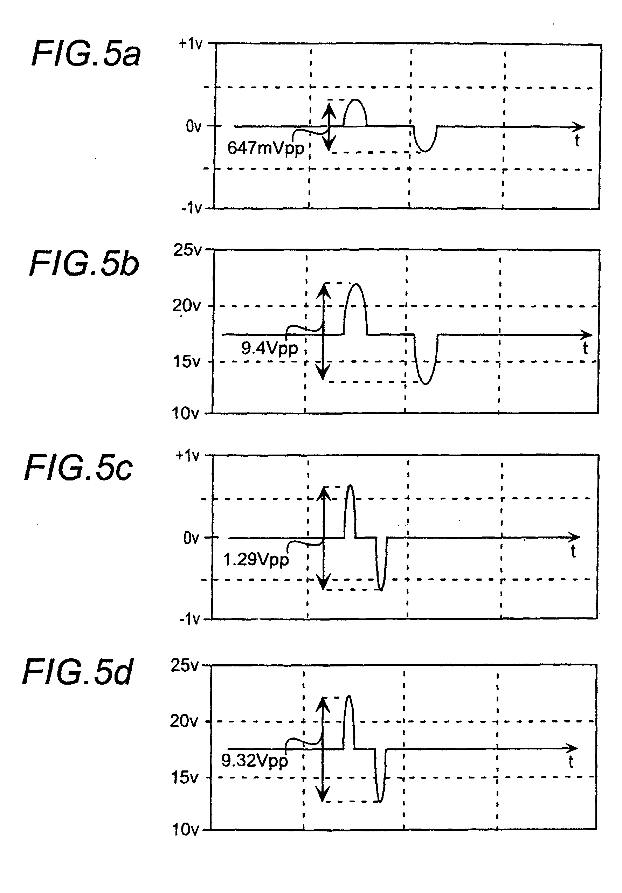

FIGURES 5(a), 5(b), 5(c) and 5(d) illustrate the problem identified by applicants and the advantageous amplitude control solution described herein. FIGURE 5(a) shows an example of an SVM signal at an output of a differentiator or SVM signal generator. The SVM signal was formed by differentiation of a 1 H luminance signal component comprising a 100 IRE pulse with 60 nanosecond rise and fall times. FIGURE 5(c) shows an SVM signal formed by differentiation of a 2H video signal comprising a 100 IRE pulse with 30 nanosecond rise and fall times. The exemplary waveforms for FIGURES 5(a) and 5(c) are chosen to be visually equal, when displayed. Both of these signals are depicted with reference to the output of derivative circuit 1 of FIGURE 2. As described earlier, the SVM signal resulting from the 2H source is depicted with approximately twice the amplitude of the SVM signal derived from the 1H source.

Referring now to FIGURES 5(b) and 5(d), the effects of the advantageous automatic control system are shown according to a preferred embodiment of the invention. FIGURE 5(b) illustrates the amplitude of the 1H SVM output signal as measured from the output of variable gain amplifier 2 in FIGURE 2. FIGURE 5(d) shows the amplitude of the 2H SVM output signal similarly measured at the output of variable gain amplifier 2 in FIGURE 2. As can be seen from the waveforms depicted in FIGURES 5(b) and 5(d), the amplitude of the 1H and 2H SVM output signals are approximately the same. Thus, the SVM automatic gain control system maintains an optimal amplitude range for the scanning velocity modulation signal at multiple scan frequencies.

## Claims

1. A video display apparatus, operable at a plurality of scanning frequencies and including scanning beam velocity modulation, comprising:
a controllable scanning velocity modulation signal amplifier for generating a scanning velocity modulation deflection signal responsive to a scanning velocity modulation signal; and,
means for generating a control signal coupled to said amplifier for open loop control of said scanning velocity modulation deflection signal in amplitude responsive to selected ones of said plurality of scanning frequencies.

2. The video display apparatus of claim 1, wherein said control signal reduces said scanning velocity modulation deflection signal amplitude in accordance with an increasing scanning frequency of said plurality of scanning frequencies.

3. The method according to claim 1, comprising a further step of:
selecting a different one of said plurality of horizontal scanning frequencies and reducing said amplitude of a scanning velocity modulation signal in accordance with said different one having a horizontal scanning frequency greater than a horizontal scanning frequency of a prior selection.

4. A method for controlling scan velocity modulation in a video display apparatus operable at a plurality of horizontal scanning frequencies, comprising the steps of:
generating from a signal coupled for display by said apparatus a scanning velocity modulation signal with a range of amplitudes representative of a horizontal scanning frequency of said signal coupled for display;
determining said horizontal scanning frequency of said signal coupled for display;
generating a control signal in accordance with said determined scanning frequency to maintain said scanning velocity modulation signal within said range of amplitudes substantially independent of said horizontal scanning frequency of said signal coupled for display.

5. The method according to claim 4, wherein said control signal generating step comprises the step of;
representing said determined horizontal scanning frequency with a DC voltage that varies proportionally as a function of said determined horizontal scanning frequency.

6. The method according to claim 5, comprising the step of;
controlling said amplitude of said scanning velocity modulation signal responsive to said DC voltage.

7. The method according to claim 4, wherein said control signal generating step comprises the step of;
representing said determined horizontal scanning frequency with a digital signal generated by a microprocessor.

8. The method according to claim 7 comprises the step of;
controlling said amplitude of said scanning velocity modulation signal responsive to said digital signal.

9. A video display apparatus with scan velocity modulation and operable at a plurality of scanning frequencies comprising:
means for generating a scanning velocity modulation signal from a display signal coupled to said apparatus, said scanning velocity modulation signal having an amplitude range;
means for determining said horizontal scanning frequency of said display signal;
means for generating a control signal responsive to said determined horizontal scanning frequency; and,
a differential amplifier responsive to said control signal for selectively controlling said scanning velocity modulation signal to maintain said scanning velocity modulation signal within said amplitude range substantially independent of said determined horizontal scanning frequency.

10. The video display apparatus according to claim 9, wherein said means for selectively controlling reduces said amplitude of said scanning velocity modulation signal in accordance a frequency increase of said determined horizontal scanning frequency.

11. The video display apparatus according to claim 9, wherein said means for selectively controlling halves said amplitude of said scanning velocity modulation signal for each octave increase in said determined horizontal scanning frequency.

12. The video display apparatus according to claim 9, wherein said control signal representing said determined horizontal scanning frequency is a DC voltage that varies proportionally as a function of said determined horizontal scanning frequency.

13. The video display apparatus according to claim 9, wherein said control signal representing said determined horizontal scanning frequency is a digital signal generated by a microprocessor.

14. The video display apparatus according to claim 13, wherein said digital signal sets a gain register to control said amplitude of said scanning velocity modulation signal.

## Patentansprüche

1. Videoanzeigevorrichtung, die mit mehreren Abtastfrequenzen betreibbar ist und eine Abtaststrahlgeschwindigkeitsmodulation enthält, umfassend:
einen regelbaren Abtastgeschwindigkeitsmodulationssignalverstärker zum Erzeugen eines Abtastgeschwindigkeitsmodulationsablenksignals als Reaktion auf ein Abtastgeschwindigkeitsmodulationssignal; und
ein Mittel zum Erzeugen eines Regelsignals, das zur Regelung des Abtastgeschwindigkeitsmodulationsablenksignals bezüglich der Amplitude als Reaktion auf ausgewählte der mehreren Abtastfrequenzen in offener Schleife an den Verstärker angekoppelt wird.

2. Videoanzeigevorrichtung nach Anspruch 1, wobei das Regelsignal die Amplitude des Abtastgeschwindigkeitsmodulationsablenksignals gemäß einer zunehmenden Abtastfrequenz der mehreren Abtastfrequenzen verringert.

3. Verfahren nach Anspruch 1, weiterhin mit dem folgenden Schritt:
Wählen einer anderen der mehreren Horizontal-Abtastfrequenzen und Verringern der Amplitude eines Abtastgeschwindigkeitsmodulationssignals gemäß dem Umstand, daß die andere eine Horizontal-Abtastfrequenz aufweist, die größer als eine Horizontal-Abtastfrequenz einer vorherigen Auswahl ist.

4. Verfahren zur Regelung der Abtastgeschwindigkeitsmodulation in einer Videoanzeigevorrichtung, die mit mehreren Horizontal-Abtastfrequenzen betreibbar ist, mit den folgenden Schritten:
Erzeugen, aus einem zur Anzeige durch die Vorrichtung angekoppelten Signals, eines Abtastgeschwindigkeitsmodulationssignals mit einem Amplitudenumfang, der eine Horizontal-Abtastfrequenz des zur Anzeige angekoppelten Signals darstellt;
Bestimmen der Horizontal-Abtastfrequenz des zur Anzeige angekoppelten Signals;
Erzeugen eines Regelsignals gemäß der bestimmten Abtastfrequenz, um das Abtastgeschwindigkeitsmodulationssignal im wesentlichen unabhängig von der Horizontal-Abtastfrequenz des zur Anzeige angekoppelten Signals in dem Umfang von Amplituden zu halten.

5. Verfahren nach Anspruch 4, wobei der Schritt des Erzeugens des Regelsignals den folgenden Schritt umfaßt:
Darstellen der bestimmten Horizontal-Abtastfrequenz mit einer Gleichspannung, die sich proportional als Funktion der bestimmten Horizontal-Abtastfrequenz ändert.

6. Verfahren nach Anspruch 5, mit dem folgenden Schritt:
Regeln der Amplitude des Abtastgeschwindigkeitsmodulationssignals als Reaktion auf die Gleichspannung.

7. Verfahren nach Anspruch 4, wobei der Schritt des Erzeugens des Regelsignals den folgenden Schritt umfaßt:
Darstellten der bestimmten Horizontal-Abtastfrequenz mit einem durch einen Mikroprozessor erzeugten Digitalsignal.

8. Verfahren nach Anspruch 7, mit dem folgenden Schritt:
Regeln der Amplitude des Abtastgeschwindigkeitsmodulationssignals als Reaktion auf das Digitalsignal.

9. Videoanzeigevorrichtung mit Abtastgeschwindigkeitsmodulation, die mit mehreren Abtastfrequenzen betreibbar ist, umfassend:
ein Mittel zum Erzeugen eines Abtastgeschwindigkeitsmodulationssignals aus einem an die Vorrichtung angekoppelten Anzeigesignal, wobei das Abtastgeschwindigkeitsmodulationssignal einen Amplitudenumfang aufweist;
ein Mittel zum Bestimmen der Horizontal-Abtastfrequenz des Anzeigesignals;
ein Mittel zum Erzeugen eines Regelsignals als Reaktion auf die bestimmte der Horizontal-Abtastfrequenz; und
einen Differenzverstärker, der auf das Regelsignal reagiert, um das Abtastgeschwindigkeitsmodulationssignal selektiv zu regeln, um das Abtastgeschwindigkeitsmodulationssignal im wesentlichen unabhängig von der bestimmten Horizontal-Abtastfrequenz in dem Amplitudenumfang zu halten.

10. Videoanzeigevorrichtung nach Anspruch 9, wobei das Mittel zum selektiven Regeln die Amplitude des Abtastgeschwindigkeitsmodulationssignals gemäß einer Frequenzzunahme der bestimmten Horizontal-Abtastfrequenz verringert.

11. Videoanzeigevorrichtung nach Anspruch 9, wobei das Mittel zum selektiven Regeln die Amplitude des Abtastgeschwindigkeitsmodulationssignals für jede Oktavzunahme der bestimmten Horizontal-Abtastfrequenz halbiert.

12. Videoanzeigevorrichtung nach Anspruch 9, wobei das die bestimmte Horizontal-Abtastfrequenz darstellende Regelsignal eine Gleichspannung ist, die sich proportional als Funktion der bestimmten Horizontal-Abtastfrequenz ändert.

13. Videoanzeigevorrichtung nach Anspruch 9, wobei das die bestimmte Horizontal-Abtastfrequenz darstellende Regelsignal ein durch einen Mikroprozessor erzeugtes Digitalsignal ist.

14. Videoanzeigevorrichtung nach Anspruch 13, wobei das Digitalsignal ein Verstärkungsregister setzt, um die Amplitude des Abtastgeschwindigkeitsmodulationssignals zu regeln.

## Revendications

1. Appareil d'affichage vidéo, pouvant fonctionner avec plusieurs fréquences de balayage et incluant une modulation de la vitesse du faisceau de balayage, comprenant :
- un amplificateur de signaux de modulation de la vitesse de balayage réglable permettant d'émettre un signal de déviation de modulation de la vitesse de balayage en réponse à un signal de modulation de la vitesse de balayage ; et
- des systèmes permettant d'émettre un signal de commande couplé audit amplificateur pour un contrôle en boucle ouverte dudit signal de déviation de modulation de la vitesse de balayage d'amplitude en réponse à celles desdites fréquences de balayage.

2. Appareil d'affichage vidéo conforme à la revendication 1, dans laquelle ledit signal de commande réduit l'amplitude du signal de déviation de modulation de la vitesse de balayage conformément à une fréquence de balayage en augmentation desdites fréquences de balayage.

3. Méthode conforme à la revendication 1, comprenant une autre étape de :
sélection d'une fréquence différente desdites fréquences de balayage horizontal et de réduction de ladite amplitude d'un signal de modulation de la vitesse de balayage conformément à ladite fréquence différente présentant une fréquence de balayage horizontal supérieure à une fréquence de balayage horizontal d'une sélection précédente.

4. Méthode de contrôle de la modulation de la vitesse de balayage dans un appareil d'affichage vidéo pouvant fonctionner avec plusieurs fréquences de balayage horizontal, comprenant les étapes suivantes :
l'émission à partir d'un signal couplé pour l'affichage par ledit appareil d'un signal de modulation de la vitesse de balayage avec une gamme d'amplitudes représentatives d'une fréquence de balayage horizontal dudit signal couplé pour l'affichage ;
la détermination de ladite fréquence de balayage horizontal dudit signal couplé pour l'affichage ;
l'émission d'un signal de commande conformément à ladite fréquence de balayage déterminée pour maintenir ledit signal de modulation de la vitesse de balayage de ladite gamme d'amplitudes en grande partie indépendant de ladite fréquence de balayage horizontal dudit signal couplé pour l'affichage.

5. Méthode conforme à la revendication 4, dans laquelle l'étape d'émission dudit signal de commande comprend l'étape suivante ;
!a représentation de ladite fréquence de balayage horizontal déterminée par une tension continue qui varie proportionnellement en tant que fonction de ladite fréquence de balayage horizontal déterminée.

6. Méthode conforme à la revendication 5, comprenant l'étape suivante :
le réglage de ladite amplitude dudit signal de modulation de la vitesse de balayage en réponse à ladite tension continue.

7. Méthode conforme à la revendication 4, dans laquelle ladite étape d'émission du signal de commande comprend l'étape suivante ;
la représentation de ladite fréquence de balayage horizontal déterminée par un signal numérique émis par un microprocesseur.

8. Méthode conforme à la revendication 7 comprend l'étape suivante ;
le contrôle de ladite amplitude dudit signal de modulation de la vitesse de balayage en réponse audit signalnumérique.

9. Appareil d'affichage vidéo avec modulation de la vitesse de balayage pouvant fonctionner avec plusieurs fréquences de balayage comprenant :
des systèmes d'émission d'un signal de modulation de la vitesse de balayage à partir d'un signal d'affichage couplé audit appareil, ledit signal de modulation de la vitesse de balayage comportant une gamme d'amplitudes ;
des systèmes de détermination de ladite fréquence de balayage horizontal dudit signal d'affichage ;
des systèmes d'émission d'un signal de commande en réponse à ladite fréquence de balayage horizontal déterminée ; et,
un amplificateur différentiel réactif audit signal de commande pour le contrôle sélectif dudit signal de modulation de la vitesse de balayage pour maintenir ledit signal de modulation de la vitesse de balayage de ladite gamme d'amplitudes en grande partie indépendant de ladite fréquence de balayage horizontal déterminée.

10. Appareil d'affichage vidéo conforme à la revendication 9, dans laquelle ledit système de contrôle sélectif réduit ladite amplitude dudit signal de modulation de la vitesse de balayage conformément à une augmentation de fréquence de ladite fréquence de balayage horizontal.

11. Appareil d'affichage vidéo conforme à la revendication 9, dans laquelle ledit système de contrôle sélectif réduit de moitié ladite amplitude dudit signal de modulation de la vitesse de balayage à chaque augmentation de l'octave de ladite fréquence de balayage horizontal déterminée.

12. Appareil d'affichage vidéo conforme à la revendication 9, dans laquelle ledit signal de commande représentant ladite fréquence de balayage horizontal déterminée est une tension continue qui varie proportionnellement en tant que fonction de ladite fréquence de balayage horizontal déterminée.

13. Appareil d'affichage vidéo conforme à la revendication 9, dans laquelle ledit signal de commande représentant ladite fréquence de balayage horizontal déterminée est un signal numérique émis par un microprocesseur.

14. Appareil d'affichage vidéo conforme à la revendication 13, dans laquelle ledit signal numérique définit un enregistreur de gain pour contrôler ladite amplitude dudit signal de modulation de la vitesse de balayage.
